# EUROPEAN PATENT APPLICATION

(11) **EP 2 164 072 A1**
(43) Date of publication of application: **17.03.2010**
(21) Application number: 07745389.2
(22) Date of filing: 15.06.2007
(51) Int. Cl.: G11B 20/10, G11B 7/0045, G11B 7/007

(54) **RECORDING DEVICE AND METHOD, AND CONTENT DISTRIBUTION SYSTEM**

(71) Applicant: Pioneer Corporation, Tokyo 153-8654 (JP)
(72) Inventor: NAMIKI, Tsuyoshi, Tsurugashima-shi Saitama 350-2288 (JP); HASEBE, Tsuyoshi, Tsurugashima-shi Saitama 350-2288 (JP); YOSHIDA, Masayoshi, Tsurugashima-shi Saitama 350-2288 (JP); KATO, Masahiro, Tsurugashima-shi Saitama 350-2288 (JP)
(74) Representative: Viering, Jentschura & Partner
(86) International application number: PCT/JP2007/062134
(87) International publication number: WO 2008/152734

(57) **Abstract**

A recording device (2) records content data on a recordable information recording medium (1). The recording device comprises a reading means (215) for reading capacity information (111a) indicating the capacity of the medium which is the capacity of the information recording medium previously recorded on the information recording medium, a content area (31) including content data recorded on the information recording medium, an image data generating means (221) for generating image data (30) having a padding area (32) including padding data supplied so as to reach the medium capacity shown by the read capacity information, and a recording means (211) for recording the generated image data on the information recording medium.

## Description

### Technical Field

The present invention relates to a recording apparatus and method which records content data delivered through a network such as the Internet, and a content delivery system.

### Background Art

In this type of recording apparatus, an information recording medium is recorded to have broad utility on the recording apparatus. For example, a patent document 1 describes the following technology; record information encrypted by using encryption information recorded on a DVD-RW (DVD-Re-recordable Disc) is obtained through a network, and the obtained record information is recorded onto the DVD-RW, by which the DVD-RW can be reproduced on a reproducing apparatus for reproducing the record information by using the encryption information pre-recorded on the information recording medium.
Patent Document 1: Japanese Patent Application Laid Open No. 2001-307427

### Disclosure of Invention

### Subject to be Solved by the Invention

According to the aforementioned background art, however, the format structure of the DVD-RW is not disclosed. Thus, there is a possibility that the information recording medium recorded on a recording apparatus cannot be reproduced on a reproducing apparatus that is compatible only for a read-only information recording medium such as a DVD-ROM (DVD-Read Only Memory), which is technically problematic.

Normally, in a DVD-ROM as one example of the read-only information recording medium, a last sector address of the record information recorded in a CDZ (Control Data Zone) is recorded. On the other hand, in a DVD-R (DVD-Recordable) as one example of a recordable information recording medium, there are provided not only the CDZ but also a RPFIZ (R-Physical Format Information Zone) to record therein the last sector address of the record information which is actually recorded in finalizing.

In the reproduction of the DVD-ROM, the last sector address is obtained from the CDZ. On the other hand, in the reproduction of the DVD-R, the last sector address is obtained from the RPFIZ. The reproducing apparatus reads an AVDP (Anchor Volume Descriptor Pointer) recorded at the obtained last sector address and accesses the actual data of the record information recorded on the DVD-ROM or DVD-R.

However, if the record information is recorded onto the recordable information recording medium to have the same format structure as that of the read-only information recording medium, for example, the RPFIZ cannot be provided. Thus, the volume of the recorded record information cannot be recorded onto the information recording medium, and information that is important in the reproduction of the information recording medium, such as the AVDP, cannot be obtained thereby to commit a standard violation, which is technically problematic.

Incidentally, the "AVDP" corresponds to an entry point to look for management information about UDF (Universal Disk Format). The AVDP is normally recorded in the 256-th sector and the N-th sector or the (N-256)-th sector (wherein "N" is a maximum logical sector number), and it is referred to when the actual data is accessed.

In view of the aforementioned problems, it is therefore an object of the present invention to provide a recording apparatus and method which can improve the versatility of the information recording medium recorded on the recording apparatus and which can bring it into compliance with a predetermined standard, and a content delivery system.

### Means for Solving the Subject

The above object of the present invention can be achieved by a first recording apparatus for recording content data onto a recordable information recording medium, the recording apparatus provided with: a reading device for reading volume information which is pre-recorded on the information recording medium and which indicates a medium volume, which is a volume of the information recording medium; an image data generating device for generating image data having a content area including the content data to be recorded onto the information recording medium and a padding area including padding data which is supplied to reach to the medium volume indicated by the read volume information; and a recording device for recording the generated image data onto the information recording medium.

According to the first recording apparatus of the present invention, the recording apparatus which is a personal computer having an optical drive module such as a DVD drive records the content data onto the recordable information recording medium such as a DVD-R. Here, the "content data" of the present invention typically means content data with visual information, i.e. image information or video information, such as a film, a drama, and animation; however, it may include content data only with auditory information, i.e. audio information, such as music.

Incidentally, the content data to be recorded onto the information recording medium is typically delivered through a network such as the Internet, like EST (Electric Sell Through); however, it may be broadcasted in a digital manner such as satellite digital broadcast and terrestrial digital broadcast.

In the information recording medium, the volume information indicating the medium volume which is the volume of the information recording medium (typically, a sector address indicating the end of a data area of the information recording medium, i.e. a last sector address) is pre-recorded. The reading device of a drive module of the recording apparatus reads the volume information from the information recording medium.

The image data generating device of a host computer generates the image data having the content area including the content data to be recorded onto the information recording medium and the padding area including the padding data which is supplied to reach to the medium volume indicated by the read volume information. Here, the expression "to reach to the medium volume" means that the sum of the volume of the content data, e.g. the volume of predetermined data such as an AVDP and the volume of the padding data, reaches to the medium volume.

The "padding data" of the present invention is data to be supplied if a data volume is short when a certain volume of data is constructed; for example, it is all-zero data. Moreover, the format structure of the "image data" of the present invention is the same as that of a read-only information recording medium.

Incidentally, the predetermined data such as the AVDP is disposed after the padding area of the image data, i.e. at a position corresponding to the last sector address of the data area of the information recording medium.

The image data generating device performs the authoring of the content data when generating the image data. Incidentally, the content data is encrypted in a predetermined method such as a CSS (Content Scramble System).

On the other hand, the image data generating device may generate the padding data included in the padding area when generating the image data or may determine only a start position (i.e. a start sector address) and an end position (i.e. an end sector address) of the padding area or only the start position of the padding area and the volume of the padding area without generating the padding data.

If the image data generating device generates the padding data, a padding volume which is a volume of the padding area is calculated by subtracting a content volume which is a volume of the content data to be recorded onto the information recording medium and a volume of the predetermined data such as the AVDP from the medium volume indicated by the read volume information. Then, the image data generating device generates the padding data with a volume corresponding to the calculated padding volume, or small-volume padding data with a volume that is smaller than the calculated padding volume.

Incidentally, the volume of the small-volume padding data is typically less than or equal to the volume of the data that can be transmitted at a time between the drive module and the host computer of the recording apparatus.

The recording device of the drive module records the generated image data onto the information recording medium. Incidentally, when the image data is recorded, the generated image data is typically divided into a plurality of data with the volume (e.g. 2ECC blocks) of the data that can be transmitted at a time to the drive module from the host computer. Then, the recording device repeatedly receives the divided data and records the received data onto the information recording medium.

If the image data generating device generates the small-volume padding data and when the recording device records the padding area of the generated image data onto the information recording medium, the host computer repeatedly transmits the generated small-volume padding data to the drive module until it reaches to the padding volume.

Moreover, if the image data generating device does not generate the padding data and when the recording device records the padding area of the image data onto the information recording medium, the host computer transmits such a command or the like that the recording device generates and records the padding data, to the drive module. The recording device generates the padding data and records the generated padding data onto the information recording medium, in accordance with the transmitted command or the like. Incidentally, the transmitted command or the like includes information indicating a volume and a sector address to start the recording of the padding data.

According to the study of the present inventors, generally, in a CDZ in a lead-in area of a DVD-ROM as one example of the read-only information recording medium, the last sector address of the data such as the content data recorded on the DVD-ROM is recorded. In the reproduction of the DVD-ROM, a reproducing apparatus firstly obtains the AVDP in accordance with the last sector address recorded in the CDZ.

On the other hand, in the CDZ in the lead-area of a DVD-R as one example of the recordable information recording medium, the medium volume of the DVD-R is recorded. In a RPFIZ, the last sector address of the data recorded on the DVD-R is recorded. In the reproduction of the DVD-R, the reproducing apparatus firstly obtains the AVDP in accordance with the last sector address recorded in the RPFIZ.

If the format structure of the DVD-R is the same as that of the DVD-ROM (e.g. if the RPFIZ is not provided), the reproducing apparatus attempts to obtain the AVDP in accordance with the medium volume of the DVD-R recorded in the CDZ. However, the volume of the data recorded on the DVD-R is various, so that there is a possibility that the reproducing apparatus cannot obtain the AVDP disposed at the end of the recorded data. Alternatively, it is found that there is a possibility that the AVDP cannot be detected thereby to commit a standard violation when verification is performed on the DVD-R.

In the present invention, however, the image data generating device generates the image data having the content area including the content data to be recorded onto the information recording medium and the padding area including the padding data which is supplied to reach to the medium volume indicated by the read volume information. This equalizes the volume of the data such as the content data to be recorded onto the information recording medium with the medium volume indicated by the read volume information.

Therefore, even if the format structure of the information recording medium is the same as that of the read-only information recording medium, the reproducing apparatus can obtain e.g. the AVDP in accordance with the volume information indicating the medium volume recorded on the information recording medium.

Consequently, according to the first recording apparatus of the present invention, it is possible to improve the versatility of the recorded information recording medium and bring it into compliance with a predetermined standard.

In one aspect of the first recording apparatus of the present invention, the recording device further records management information which is information for managing the content data to be recorded, at a position corresponding to a value of the medium volume indicated by the read volume information of the information recording medium.

According to this aspect, the recording device records the management information which is information for managing the content data to be recorded, which is e.g. the AVDP, at the position corresponding to the value of the medium volume indicated by the read volume information of the information recording medium.

Incidentally, in the information recording medium, as described above, the "volume information indicating the medium volume" is typically recorded as the sector address indicating the end of the data area of the information recording medium. Therefore, the "position corresponding to the value of the medium volume indicated by the read volume information of the information recording medium" means a sector at the end of the data area of the information recording medium.

In another aspect of the first recording apparatus of the present invention, the image data generating device includes a calculating device for calculating a padding volume which is a volume of the padding area from the medium volume indicated by the read volume information and a content volume which is a volume of the content data to be recorded.

According to this aspect, the calculating device calculates the padding volume which is the volume of the padding area, from the medium volume indicated by the read volume information and the content volume which is the volume of the content data to be recorded. By this, it is possible to calculate the padding volume, relatively easily.

In an aspect associated with the calculating device, the image data generating device may include a padding data generating device for generating the padding data with a volume corresponding to the calculated padding volume.

By virtue of such construction, the padding data with the volume corresponding to the calculated padding volume is generated by the padding data generating device.

In an aspect associated with the calculating device, the image data generating device may include a padding data generating device for generating small-volume padding data with a volume that is smaller than the calculated padding volume, and may repeatedly use the generated small-volume padding data until it reaches to the calculated padding volume.

By virtue of such construction, by generating the padding data when the image data is generated, it is possible to inhibit the capacity of a storing device such as a hard disk drive from being consumed, so that it is extremely useful in practice.

Here, the expression "repeatedly use" means that the recording device repeatedly transmits the same generated small-volume padding data when the recording device records the padding area of the image data onto the information recording medium.

In another aspect of the first recording apparatus of the present invention, the image data generating device transmits position information indicating a position of the padding area, to the recording device, and the recording device generates the padding data included in the padding area and records the generated padding data onto the information recording medium in accordance with the transmitted position information.

According to this aspect, when the image data is generated, the padding data is not generated. Thus, it is possible to avoid that the volume or capacity of the storing device is consumed by the padding data, so that it is extremely useful in practice.

In another aspect of the first recording apparatus of the present invention, the image data generating device includes a padding file generating device for generating the padding data included in the padding area, as a predetermined file.

According to this aspect, the padding file generating device generates the padding data included in the padding area, as the predetermined file. Here, the "predetermined file" may be a meaningless file or a file for providing useful information for a user, such as "Read me". Moreover, the generated file is not limited to one file, but a plurality of files may be generated.

Incidentally, typically, the generated file is not stored in a folder in which at least the content data is stored (e.g. a VIDEO_TS folder).

In another aspect of the first recording apparatus of the present invention, the medium volume indicated by the read volume information is smaller than a physical size of the information recording medium.

According to this aspect, the medium volume indicated by the volume information recorded on the information recording medium is smaller than the physical size of the information recording medium. Here, the expression "smaller than the physical size of the information recording medium" means that it is smaller in comparison with the medium volume estimated from the physical size of the information recording medium, i.e. in comparison with a value obtained by multiplying the area of the information recording medium by a surface recording density. Specifically, for example, the volume information indicating a medium volume of 3GB or the like is recorded on a 4.7GB (Giga Byte)-recordable information recording medium based on the physical size.

By this, for example, when 2GB content data is recorded on the 4.7GB-recordable information recording medium based on the physical size, the remaining 2.7GB padding data does not have to recorded. Thus, it is possible to reduce a time for recording completion, so that it is extremely useful in practice. In addition, it is possible to reduce the probability of failure due to the long-time use of the drive module, so that it is extremely useful in practice.

The above object of the present invention can be also achieved by a second recording apparatus for recording content data onto a recordable information recording medium, the recording apparatus provided with: a reading device for reading volume information which is pre-recorded on the information recording medium and which indicates a medium volume, which is a volume of the information recording medium; a reserving device for reserving a content area with a volume that is smaller than the medium volume indicated by the read volume information by a predetermined volume; and a recording device for recording the content data to be recorded onto the information recording medium into the reserved content area and padding data to be supplied for the reserved content area.

The reading device of the drive module reads the volume information indicating the medium volume pre-recorded on the recordable information recording medium. The reserving device of the host computer reserves the content area with the volume that is smaller than the medium volume indicated by the read volume information by the predetermined volume. Here, the "predetermined volume" is the sum of the volume of the predetermined data such as the AVDP and the volume of a link block which is inserted when the writing is stopped or restarted. Incidentally, the volume of the link block is zero in the case of a zero-link method.

The recording device of the drive module records the content data to be recorded onto the information recording medium, into the reserved content area, as well as recording the padding data to be supplied for the reserved content area.

The recording device of the second recording apparatus of the present invention uses "incremental recording" and records the content data or the like onto the information recording medium. Therefore, if the volume of the content data to be recorded does not reach to the content volume which is the volume of the reserved content area, the recording device automatically generates the padding data and supplies it for the content area such that it reaches to the content volume.

The recording device records the predetermined data such as the AVDP immediately after the content area, i.e. into the sector at the end of the data area of the information recording medium, in the case of the zero-link method after recording the content data and the padding data. On the other hand, for example, in the case of a 2k link method, a 32k link method, or the like, a predetermined link block is inserted after the content area, and the predetermined data such as the AVDP is recorded after the inserted predetermined link block. Even in this case, the predetermined data such as the AVDP is recorded into the sector at the end of the data area of the information recording medium.

Incidentally, in the second recording apparatus of the present invention, "incremental recording" is used to record the content data or the like onto the information recording medium, and the recording is performed such that the format structure of the recorded information recording medium is the same as that of the read-only information recording medium.

Consequently, according to the second recording apparatus of the present invention, it is possible to improve the versatility of the recorded information recording medium and bring it into compliance with a predetermined standard.

In addition, while the recording device automatically records the padding data, it is possible to reduce a load of the host computer of the recording apparatus, so that it is extremely useful in practice.

The above object of the present invention can be also achieved by a content delivery system provided with: a server apparatus and a recording apparatus which are included in a network; and an information recording medium which can be set on the recording apparatus and which is recordable, wherein volume information indicating a medium volume which is a volume of the information recording medium is recorded on the information recording medium, the recording apparatus transmits the recorded volume information to the server apparatus if the information recording medium is set, the server apparatus generates image data having a content area including the content data to be recorded onto the information recording medium and a padding area including padding data which is supplied to reach to the medium volume indicated by the transmitted volume information and delivers the generated image data to the recording apparatus, and the recording apparatus records the delivered image data to the information recording medium.

According to the content delivery system of the present invention, the server apparatus for delivering the content data such as a film and a drama and the recording apparatus such as a personal computer having an optical drive module such as a DVD drive are included in the network such as the Internet. Moreover, the recordable information recording medium such as a DVD-R can be set on the recording apparatus. In the recording medium, the volume information indicating the medium volume which is the volume of the information recording medium is pre-recorded.

When the content data is recorded onto the information recording medium, the recording apparatus reads the volume information indicating the medium volume recorded on the information recording medium and transmits the read volume information to the server apparatus through the network, under the condition that the information recording medium is set on the recording apparatus.

The server apparatus generates the image data having the content area including the content data to be recorded onto the information recording medium and the padding area including the padding data which is supplied to reach to the medium volume indicated by the transmitted volume information.

Incidentally, the format structure of the generated image data is the same as that of the read-only information recording medium. Moreover, the predetermined data such as the AVDP is disposed at the end of the generated image data, i.e. at a position corresponding to the last sector address of the data area of the information recording medium.

Then, the server apparatus delivers the generated image data to the recording apparatus through the network. The recording apparatus records the delivered image data onto the information recording medium.

Consequently, according to the content delivery system of the present invention, it is possible to improve the versatility of the recorded information recording medium and bring it into compliance with a predetermined standard.

In addition, since the image data is generated by the server apparatus, it is possible to reduce a load of the recording apparatus, so that it is extremely useful in practice.

The above object of the present invention can be also achieved by a first recording method of recording content data onto a recordable information recording medium, the recording apparatus provided with: a reading process of reading volume information which is pre-recorded on the information recording medium and which indicates a medium volume, which is a volume of the information recording medium; an image data generating process of generating image data having a content area including the content data to be recorded onto the information recording medium and a padding area including padding data which is supplied to reach to the medium volume indicated by the read volume information; and a recording process of recording the generated image data onto the information recording medium.

According to the first recording method of the present invention, as in the first recording apparatus of the present invention, it is possible to improve the versatility of the recorded information recording medium and bring it into compliance with a predetermined standard.

Incidentally, even the first recording method of the present invention can adopt the same various aspects as those of the first recording apparatus of the present invention.

The above object of the present invention can be also achieved by a second recording method of recording content data onto a recordable information recording medium, the recording apparatus provided with: a reading process of reading volume information which is pre-recorded on the information recording medium and which indicates a medium volume, which is a volume of the information recording medium; a reserving process of reserving a content area with a volume that is smaller than the medium volume indicated by the read volume information by a predetermined volume; and a recording process of recording the content data to be recorded onto the information recording medium into the reserved content area and padding data to be supplied for the reserved content area.

According to the second recording method of the present invention, as in the second recording apparatus of the present invention, it is possible to improve the versatility of the recorded information recording medium and bring it into compliance with a predetermined standard.

Incidentally, even the second recording method of the present invention can adopt the same various aspects as those of the second recording apparatus of the present invention.

The operation and other advantages of the present invention will become more apparent from the embodiments explained below.

### Brief Description of Drawings

[FIG. 1] FIG. 1 is a schematic plan view showing the basic structure of an optical disc in a first embodiment provided with a plurality of areas in an upper part and a schematic conceptual view showing an area structure in its radial direction in a lower part.
[FIG. 2] FIG. 2 is an explanatory diagram showing one example of information pre-recorded in a CDZ in the first embodiment.
[FIG. 3] FIG. 3 is a block diagram showing the structure of a recording apparatus in the first embodiment.
[FIG. 4] FIG. 4 is a timing chart showing a recording process on the recording apparatus in the first embodiment.
[FIG. 5] FIG. 5 is a schematic conceptual view showing the data structure of image data in the first embodiment.
[FIG. 6] FIG. 6 is a timing chart showing a recording process on a recording apparatus in a second embodiment.
[FIG. 7] FIG. 7 is a timing chart showing a recording process on a recording apparatus in a third embodiment.
[FIG. 8] FIG. 8 is a timing chart showing a recording process on a recording apparatus in a fourth embodiment.
[FIG. 9] FIG. 9 is a schematic conceptual view showing the file structure of image data in the fourth embodiment.
[FIG. 10] FIG. 10 is a timing chart showing a recording process on a recording apparatus in a fifth embodiment.
[FIG. 11] FIG. 11 is a schematic conceptual view showing a reserved content area in the fifth embodiment.
[FIG. 12] FIG. 12 is a schematic conceptual view showing the reserved content area after the end of the recording of the content data in the fifth embodiment.
[FIG. 13] FIG. 13 is a schematic diagram showing the structure of a content delivery system in an embodiment of the present invention.
[FIG. 14] FIG. 14 is a block diagram showing the structure of a server apparatus in the embodiment of the present invention.
[FIG. 15] FIG. 15 is a timing chart showing the operations of the content delivery system in the embodiment of the present invention.

### Description of Reference Codes

- 1: optical disc
- 2: recording apparatus
- 3: server apparatus
- 4: network
- 11: lead-in area
- 12: data area
- 13: lead-out area
- 14: center hole
- 21: drive module
- 22: host computer

### Best Mode for Carrying Out the Invention

Hereinafter, embodiments of the recording apparatus of the present invention will be described with reference to the drawings.

### <First Embodiment>

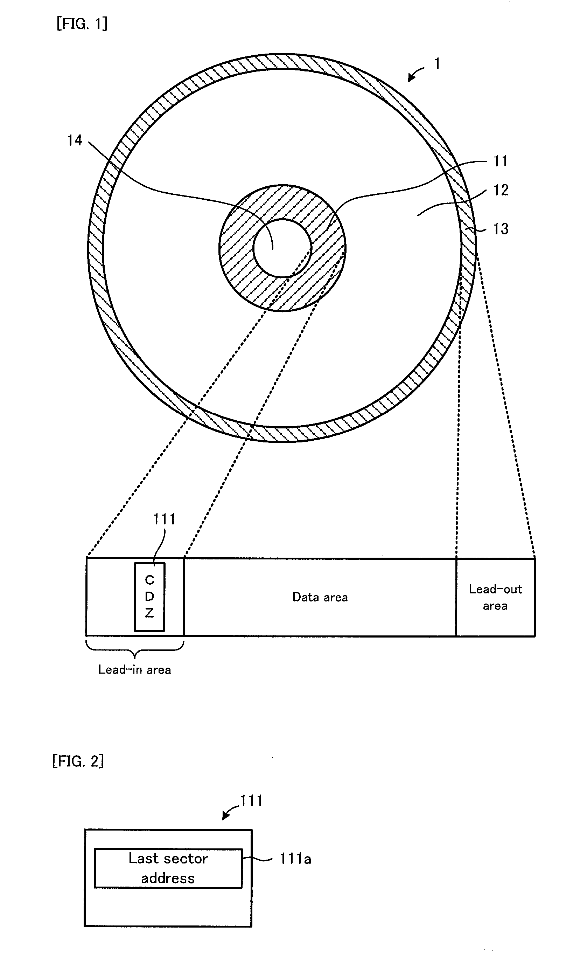

A first embodiment of the recording apparatus of the present invention will be explained with reference to FIG. 1 to FIG. 5.

### (Optical Disc)

Firstly, with reference to FIG. 1, an explanation will be given on an optical disc as one example of the "information recording medium" of the present invention on which content data or the like is recorded by a recording apparatus in the embodiment. FIG. 1 is a schematic plan view showing the basic structure of an optical disc in a first embodiment provided with a plurality of areas in an upper part and a schematic conceptual view showing an area structure in its radial direction in a lower part.

As shown in FIG. 1, an optical disc 1 which is e.g. a DVD-R is provided with a lead-in area 11, a data area 12, and a lead-out area 13, from the inner circumference to the outer circumference, centered on a center hole 14 on a recording surface on the main body of the optical disc 1. The lead-in area 11 is provided with a CDZ 111. Incidentally, a disc key is further recorded in the lead-in area 11.

Now, with reference to FIG. 2, the CDZ 111 will be explained. FIG. 2 is an explanatory diagram showing one example of information pre-recorded in the CDZ 111 in the first embodiment. As shown in FIG. 2, a last sector address 111a of the data area 12 as one example of the "volume information showing a medium volume" of the present invention is recorded in the CDZ 111.

Here, the value of the last sector address 111a may be smaller than the physical size of the optical disc 1. Specifically, for example, it may be a sector address corresponding to 2GB, a sector address corresponding to 3GB, or the like.

Incidentally, the lead-in area 11 of the optical disc 1 is not provided with a section to record therein the last sector address of the content data or the like recorded on the optical disc 1, such as a RPFIZ, so that a format structure after the content data or the like is recorded onto the optical disc 1 is the same as that of a read-only optical disc.

### (Structure of Recording Apparatus)

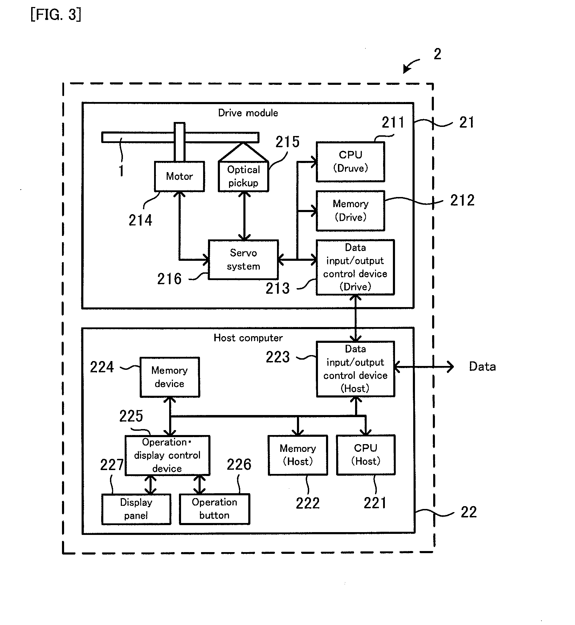

Next, with reference to FIG. 3, the structure of the recording apparatus in the embodiment will be explained. FIG. 3 is a block diagram showing the structure of the recording apparatus in the first embodiment.

In FIG. 3, a recording apparatus 2 which is e.g. a personal computer with a DVD drive is provided with a drive module 2 and a host computer 22.

The drive module 21 is provided with a CPU (Central Processing Unit) 211, a memory 212, a data input/output control device 213, a spindle motor 214, an optical pickup 215, and a servo system 216. Here, the "CPU 211" and the "optical pickup 215" in the embodiment are one example of the "recording device" and the "reading device" of the present invention, respectively.

The host computer 22 is provided with a CPU 221, a memory 222, a data input/output control device 223, a memory device 224, an operation display control device 225, an operation button 226, and a display panel 227. Here, the "CPU 221" is one example of the "image data generating device", the "calculating device", the "padding data generating device", the "padding file generating device", and the "reserving device" of the present invention.

### (Recording Process)

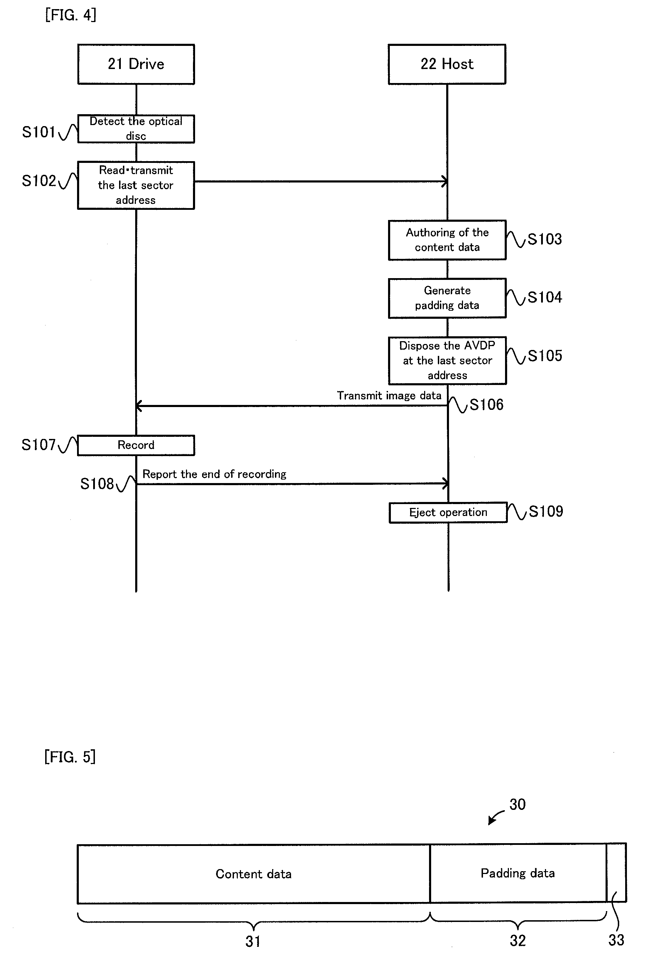

Next, with reference to FIG. 4, an explanation will be given on the operations of the recording apparatus 2 if the content data, delivered through a network such as the Internet and stored in the memory 224 which is e.g. a hard disk drive through the data input/output control device 223 of the host computer 22, is recorded onto the optical disc 1 by the recording apparatus 2 constructed in the above manner.

In FIG. 4, firstly, the CPU 211 transmits a signal indicating that detect the optical disc 1, to the drive module 21 through the data input/output control device 223 when a button which indicates recording and which is included in the operation button 226 of the host computer 22 is hit by a user or when a signal which indicates recording and which is transmitted by a remote controller or the like is received.

The CPU 211 of the drive module 21 controls the optical pickup 215 and so on to detect the optical disc 1 in accordance with a transmitted signal (step S101). If the optical disc 1 is not detected, the CPU 211 transmits a signal indicating that the optical disc 1 is not detected, to the host computer 22 through the data input/output control device 213. The CPU 221 of the host computer 22 which has received the transmitted signal typically controls the operation · display control device 225 to display a message or the like indicating that the optical disc 1 is not detected, on the display panel 227, thereby ending the process.

If the optical disc 1 is detected, the CPU 211 of the drive module 21 controls the optical pickup 215 and so on to read the last sector address 111a and the disc key recorded on the optical disc 1. Then, the CPU 211 transmits the read last sector address 111a and disc key, to the host computer 22 through the data input/output control device 213 (step S102).

The CPU 221 of the host computer 22 generates a title key and performs the authoring of the content data stored in the memory 224, as well as generating an AVDP as one example of the "management information" of the present invention (step S103). Incidentally, the content data is encrypted in a CSS method. Moreover, the generated title key is encrypted by the transmitted disc key.

Then, the CPU 221 generates padding data with a volume corresponding to a volume (i.e. padding volume) obtained by subtracting the volume of the content data and the volume of predetermined data such as the AVDP from the volume of the optical disc 1 based on the transmitted last sector address 111a (step S104). Then, the CPU 221 disposes the generated AVDP at a position corresponding to the transmitted last sector address 111a (step S105).

In the aforementioned step S103 to step S105, image data is generated. Here, with reference to FIG. 5, the generated image data will be explained. FIG. 5 is a schematic conceptual view showing the data structure of the image data in the first embodiment.

In FIG. 5, image data 30 is provided with a content area 31 including the content data, a padding area 32 including the padding data, and an AVDP 33. Here, the "content area 31" and the "padding area 32" in the embodiment are one example of the "content area" and the "padding area" of the present invention, respectively.

Back in FIG. 4 again, the CPU 221 of the host computer 22 transmits the generated image data 30 to the drive module 21 through the data input/output control device 223 (step S106). Incidentally, at this time, the generated image data 30 is divided into, e.g. 2ECC-block data which can be transmitted at a time, and the divided data is sequentially transmitted to the drive module 21.

The CPU 211 of the drive module 21 controls the optical pickup 215 and so on to record the transmitted image data 30 onto the optical disc 1 (step S107). At this time, the CPU 221 of the host computer 22 transmits a signal for regularly confirming the end of recording, to the drive module 21 through the data input/output control device 223. The CPU 211 of the drive module transmits a signal indicating the end of recording, to the host computer 22 through the data input/output control device 213, under the conditions that the recording of the transmitted image data 30 is ended and that finalizing is completed (step S108).

The CPU 221 of the host computer 22 which has received the transmitted signal controls the operation · display control device 225 to display a message such as "Eject" on the display panel 227 and transmits a signal indicating that the optical disc 1 can be ejected, to the drive module 21 through the data input/output control device 223 (step S109).

The CPU 211 of the drive module 21 which has received the transmitted signal controls a not-illustrated driving apparatus to open a not-illustrated drive tray, thereby ending the process.

In the recording apparatus 2 in the embodiment, the AVDP 33 is recorded in a sector on the optical disc 1 indicated by the last sector address 111a recorded in the CDZ 111. Therefore, as in a read-only optical disc, it is possible to obtain the AVDP 33 in accordance with the last sector address 111a recorded in the CDZ 111.

As a result, according to the recording apparatus 2 in the embodiment, it is possible to improve the versatility of the recorded optical disc 1 and bring it into compliance with a predetermined standard.

### <Second Embodiment>

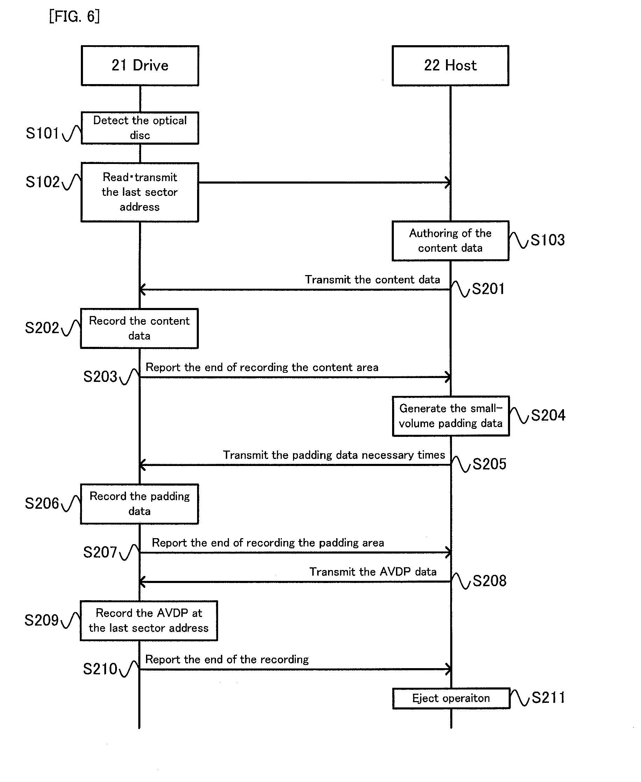

A second embodiment of the recording apparatus of the present invention will be explained with reference to FIG. 6. The second embodiment is the same as in the first embodiment, except that the volume of the generated padding data is different. Thus, in the second embodiment, the repeated explanation of the first embodiment will be omitted. Common points on the drawing will carry the same referential numerals, and basically different points will be only explained with reference to FIG. 6.

### (Recording Process)

With reference to a timing chart in FIG. 6, the recording process of the recording apparatus in the embodiment will be explained.

In FIG. 6, the authoring of the content data recorded on the optical disc 1 is performed by the CPU 221 of the host computer 22, and the AVDP is generated (step S103), and the image data 30 is generated.

With regard to the padding area 32 of the generated image data 30, a start sector address and an end sector address of the padding area 32 or the start sector address and the volume of the padding area 32 (i.e. padding volume) are determined; however, the padding data with a volume corresponding to the padding volume is not generated. In the embodiment, when the padding area 32 of the image data 30 is recorded onto the optical disc 1, the padding area 32 is recorded by generating and repeatedly transmitting small-volume padding data from the host computer 22 to the drive module 21.

The CPU 221 transmits the content data included in the content area 31 in the generated image data 30, to the drive module 21 through the data input/output control device 223 (step S201). The CPU 211 of the drive module 21 controls the optical pickup and so on to record the transmitted content data onto the optical disc 1 (step S202).

Under the condition that the recording of the transmitted content data is ended, the CPU 211 transmits a signal indicating that the recording of the content area 31 is ended, to the host computer 22 through the data input/output control device 213 (step S203).

The CPU 221 of the host computer 22 which has received the transmitted signal typically generates the small-volume padding data with a volume corresponding to the volume of data which can be transmitted at a time between the host computer 22 and the drive module 21, such as 2ECC blocks (step S204).

Then, the CPU 221 transmits the generated small-volume padding data to the drive module 21 through the data input/output control device 223, repeatedly necessary times, to record the padding area 32 of the generated image data 30 (step S205). The CPU 211 of the drive module 21 controls the optical disc 215 and so on, to record the repeatedly transmitted small-volume padding data, as described above (step S206).

Under the condition that the recording of the padding area 32 is ended, the CPU 211 transmits a signal indicating that the recording of the padding area 32 is ended, to the host computer 22 through the data input/output control device 213 (step S207).

The CPU 221 of the host computer 22 which has received the transmitted signal transmits the generated AVDP to the drive module 21 through the data input/output control device 223 (step S208).

The CPU 211 of the drive module 21 controls the optical pickup 215 and so on to record the transmitted AVDP into a sector on the optical disc 1 indicated by the last sector address 111a (step S209).

At this time, the CPU 221 of the host computer 22 transmits a signal for regularly confirming the end of recording, to the drive module 21 through the data input/output control device 223. The CPU 211 of the drive module transmits a signal indicating the end of recording, to the host computer 22 through the data input/output control device 213, under the conditions that the recording of the transmitted AVDP is ended and that finalizing is completed (step S210).

The CPU 221 of the host computer 22 which has received the transmitted signal performs a process associated with a predetermined eject operation, thereby ending the process (step S211).

Incidentally, in the embodiment, for convenience of explanation, the signal indicating the end of the recording of the content area 31 in the step S203 and the signal indicating the end of the recording of the padding area 32 in the step 207 are clearly written; however, typically, every time the data transmitted from the host computer 22 (in the case, the data with a predetermined volume divided from the generated image data 30) is recorded, the drive module 21 transmits the signal indicating the end of the recording, to the host computer 22. Then, the host computer 22 transmits next data to the drive module 21 under the condition that it has received the transmitted signal.

### <Third Embodiment>

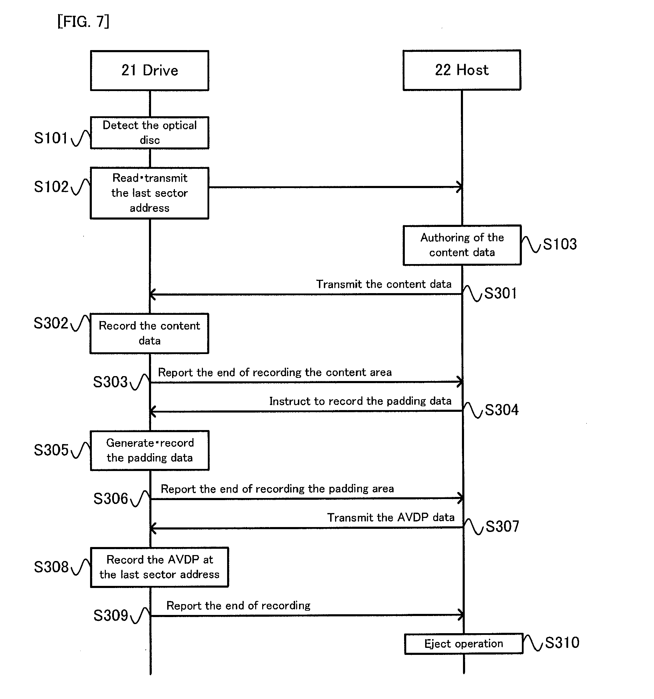

A third embodiment of the recording apparatus of the present invention will be explained with reference to FIG. 7. The third embodiment is the same as in the first embodiment, except that the padding data is generated by the drive module 21. Thus, in the third embodiment, the repeated explanation of the first embodiment will be omitted. Common points on the drawing will carry the same referential numerals, and basically different points will be only explained with reference to FIG. 7.

### (Recording Process)

With reference to a timing chart in FIG. 7, the recording process of the recording apparatus in the embodiment will be explained.

In FIG. 7, the authoring of the content data recorded on the optical disc 1 is performed by the CPU 221 of the host computer 22, and the AVDP is generated, and the image data 30 is generated (step S103). Incidentally, with regard to the padding area 32 of the generated image data 30, only a start sector address and an end sector address of the padding area 32 or the start sector address and the volume of the padding area 32 (i.e. padding volume) are determined, and the padding data included in the padding area 32 is not generated.

Then, the CPU 221 transmits the content data included in the content area 31 of the generated image data 30, to the drive module 21 through the data input/output control device 223 (step S301). The CPU 211 of the drive module 21 controls the optical pickup 215 and so on to record the transmitted content data onto the optical disc 1 (step S302).

Under the condition that the recording of the transmitted content data is ended, the CPU 211 transmits a signal indicating that the recording of the content data is ended, to the host computer 22 through the data input/output control device 213 (step S303).

The CPU 221 of the host computer 22 which has received the transmitted signal transmits a signal indicating that the padding data is to be recorded, to the drive module 21 through the data input/output control device 223 (step S304). Here, the "signal indicating that the padding data is to be recorded" includes a volume to be recorded and a sector address to start the recording as one example of the "position information" of the present invention.

The CPU 211 of the drive module 21 which has received the signal indicating the recording of the transmitted padding data, generates the padding data and controls the optical pickup 215 and so on to record the generated padding data onto the optical disc 1 (step S305). Under the condition that the recording of the padding area 32 is ended, the CPU 211 transmits a signal indicating that the recording of the padding area 32 is ended, to the host computer 22 through the data input/output control device 213 (step S306).

The CPU 221 of the host computer 22 which has received the transmitted signal transmits the generated AVDP to the drive module 21 through the data input/output control device 223 (step S307). The CPU 211 of the drive module 21 controls the optical pickup 215 and so on to record the transmitted AVDP into a sector on the optical disc 1 indicated by the last sector address 111a (step S308).

At this time, the CPU 221 of the host computer 22 transmits a signal for regularly confirming the end of recording, to the drive module 21 through the data input/output control device 223. The CPU 211 of the drive module transmits a signal indicating the end of recording, to the host computer 22 through the data input/output control device 213 under the conditions that the recording of the transmitted AVDP is ended and that finalizing is completed (step S309). The CPU 221 of the host computer 22 which has received the transmitted signal performs a process associated with a predetermined eject operation, thereby ending the process (step S310).

### <Fourth Embodiment>

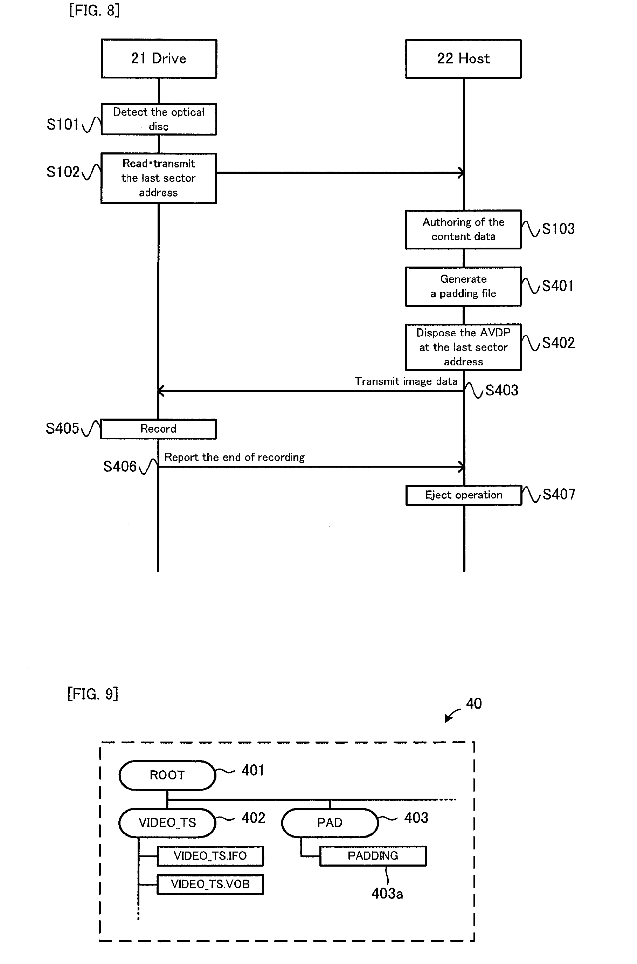

A fourth embodiment of the recording apparatus of the present invention will be explained with reference to FIG. 8 and FIG. 9. The fourth embodiment is the same as in the first embodiment, except that the padding data included in the padding area is generated as a padding file. Thus, in the fourth embodiment, the repeated explanation of the first embodiment will be omitted. Common points on the drawing will carry the same referential numerals, and basically different points will be only explained with reference to FIG. 8 and FIG. 9.

### (Recording Process)

With reference to a timing chart in FIG. 8, the recording process of the recording apparatus in the embodiment will be explained.

In FIG. 8, the authoring of the content data recorded on the optical disc 1 is performed by the CPU 221 of the host computer 22, and the AVDP is generated (step S103) before the CPU 221 generates the padding data included in the padding area as the padding file (step S401). Then, the CPU 221 disposes the generated AVDP at a position corresponding to the transmitted last sector address 111a (step S402).

Incidentally, the padding file may be one file with a volume corresponding to the padding volume, or it may be a plurality of files whose total volume is the padding volume.

In the aforementioned step S103 to step S402, image data is generated. Here, with reference to FIG. 9, the generated image data will be explained. FIG. 9 is a schematic conceptual view showing the file structure of the image data in the fourth embodiment.

In FIG. 9, in image data 40, a VIDEO_TS directory 402 to store therein the content data and a plurality of sub directories such as a PAD directory 403 to store therein the generated padding file 403a are connected under a root directory 401. Incidentally, the padding file 403a may be stored under the root directory.

Back in FIG. 8, the CPU 221 of the host computer 22 transmits the generated image data 40 to the drive module 21 through the data input/output control device 223 (step S403). The CPU 211 of the drive module 21 controls the optical pickup 215 and so on to record the transmitted image data 40 onto the optical disc 1 (step S405).

At this time, the CPU 221 of the host computer 22 transmits a signal for regularly confirming the end of recording, to the drive module 21 through the data input/output control device 223. The CPU 211 of the drive module transmits a signal indicating the end of recording, to the host computer 22 through the data input/output control device 213 under the conditions that the recording of the transmitted image data 40 is ended and that finalizing is completed (step S406). The CPU 221 of the host computer 22 which has received the transmitted signal performs a process associated with a predetermined eject operation, thereby ending the process (step S407).

### <Fifth Embodiment>

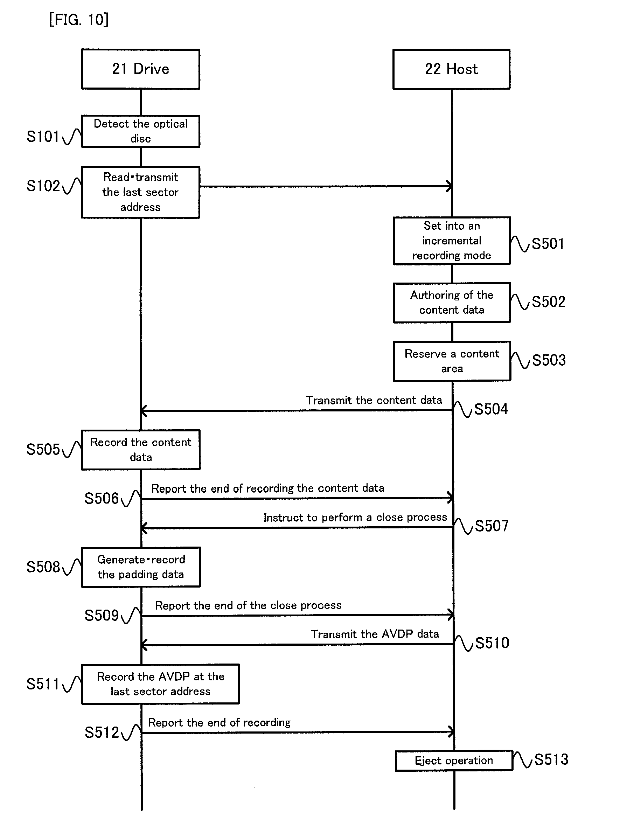

A fifth embodiment of the recording apparatus of the present invention will be explained with reference to FIG. 10 to FIG. 12. The fifth embodiment is the same as in the first embodiment, except that the content data and so on is recorded onto the optical disc by using incremental recording. Thus, in the fifth embodiment, the repeated explanation of the first embodiment will be omitted. Common points on the drawing will carry the same referential numerals, and basically different points will be only explained with reference to FIG. 10 to FIG. 12.

### (Recording Process)

With reference to a timing chart in FIG. 10, the recording process of the recording apparatus in the embodiment will be explained.

In FIG. 10, the CPU 221 of the host computer 22 which has received the last sector address 111a and the disc key recorded on the optical disc 1, sets the recording apparatus 2 into an incremental recording mode (step S501). Incidentally, the incremental recording mode may be set before or after the processes in the step S101 and the step S102 in FIG. 10.

Then, the CPU 221 generates a title key and performs the authoring of the content data, as well as generating an AVDP (step S502). Then, the CPU 221 reserves a content area with a volume that is smaller than the volume of the optical disc 1 by a predetermined volume, based on the received last sector address 111a (step S503).

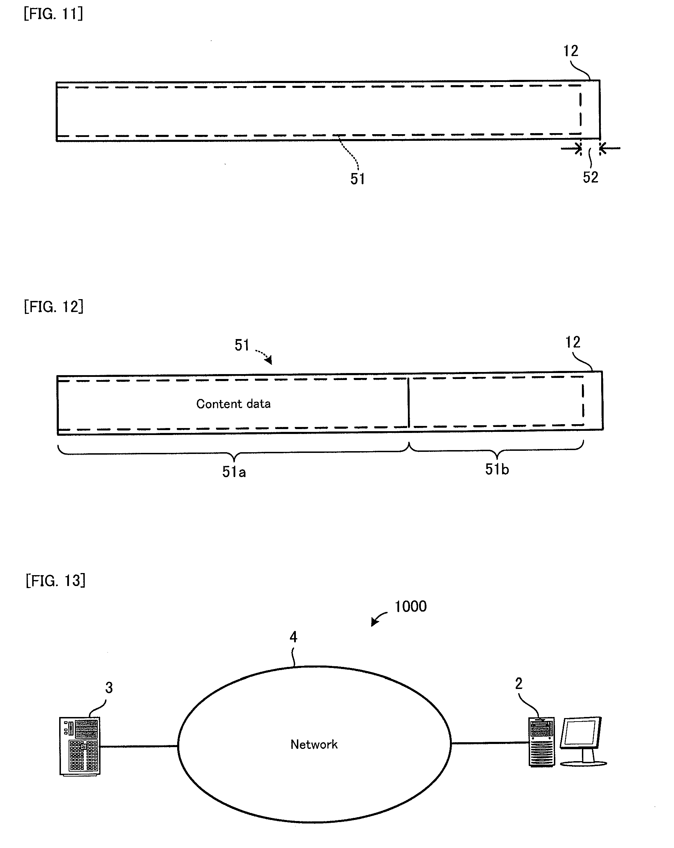

Here, with reference to FIG. 11, the reserved content area will be explained. FIG. 11 is a schematic conceptual view showing the reserved content area in the fifth embodiment. As shown in FIG. 11, the volume of a reserved content area 51 is smaller than the volume of the data area 12 of the optical disc 1 by a predetermined volume 52. Here, the predetermined volume 52 is the sum of the volume of the AVDP and the volume of a link block; however, it is equal to the volume of the AVDP in the case of a zero-link method.

Back in FIG. 10 again, the CPU 221 of the host computer 22 transmits the content data to the drive module 21 through the data input/output control device 223 (step S504). Then, the CPU 211 of the drive module 21 controls the optical pickup 215 and so on to record the transmitted content data onto the optical disc 1 (step S505).

Then, under the condition that the recording of the transmitted content data is ended, the CPU 211 transmits a signal indicating the end of recording, to the host computer 22 through the data input/output control device 213 (step S506). The CPU 221 of the host computer 22 which has received the transmitted signal transmits a signal indicating that a close process is performed on the reserved content area 51, tot the drive module 21 (step S507).

Here, with reference to FIG. 12, an explanation will be given on the content area reserved when the recording of the content data is ended. FIG. 12 is a schematic conceptual view showing the reserved content area after the end of the recording of the content data in the fifth embodiment.

As shown in FIG. 12, the reserved content area 51 has a portion 51a in which the content data is recorded and a portion 51b in which nothing is recorded. In this case, if the drive module 21 receives a signal indicating that the close process is to be performed, transmitted from the host computer 22, the CPU 211 of the drive module 21 controls the optical pickup 215 and so on to generate the padding data and to record the generated padding data into the portion 51b in which nothing is recorded (step S508).

Back in FIG. 10 again, under the condition that the close process is ended, i.e. under the condition that the recording of the padding data is ended, the CPU 211 transmits a signal indicating the close process is ended, to the host computer 22 through the data input/output control device 213 (step S509).

The CPU 221 of the host computer 22 which has received the transmitted signal transmits the generated AVDP to the drive module 21 through the data input/output control device 223 (step S510). In the case of the zero-link method, the CPU 211 of the drive module 21 controls the optical pickup 215 and so on to record the transmitted AVDP immediately after the reserved content area 51, i.e. into a sector on the optical disc 1 indicated by the last sector address (step S511).

Alternatively, in the case of a link method other than the zero-link method, such as a 2k link method and a 32k link method, the CPU 211 controls the optical pickup 215 and so on to insert a predetermined link block after the reserved content area 51 and to record the transmitted AVDP onto the optical disc 1. Even in this case, the transmitted AVDP is recorded into a sector on the optical disc 1 indicated by the last sector address.

At this time, the CPU 221 of the host computer 22 transmits a signal for regularly confirming the end of recording, to the drive module 21 through the data input/output control device 223. The CPU 211 of the drive module transmits a signal indicating the end of recording, to the host computer 22 through the data input/output control device 213 under the conditions that the recording of the transmitted AVDP is ended and that finalizing is completed (step S512). The CPU 221 of the host computer 22 which has received the transmitted signal performs a process associated with a predetermined eject operation, thereby ending the process (step S513).

### <Content Delivery System>

Next, an embodiment of the content delivery system of the present invention will be explained with reference to FIG. 13 to FIG. 15.

### (Structure of Content Delivery System)

Firstly, with reference to FIG. 13, an explanation will be given on the structure of the content delivery system in the embodiment. FIG. 13 is a schematic diagram showing the structure of the content delivery system in the embodiment.

In FIG. 13, a content delivery system 1000 is provided with the recording apparatus 2 and a server apparatus 3. The recording apparatus 2 and the server apparatus 3 are connected to each other through a network 4, such as the Internet.

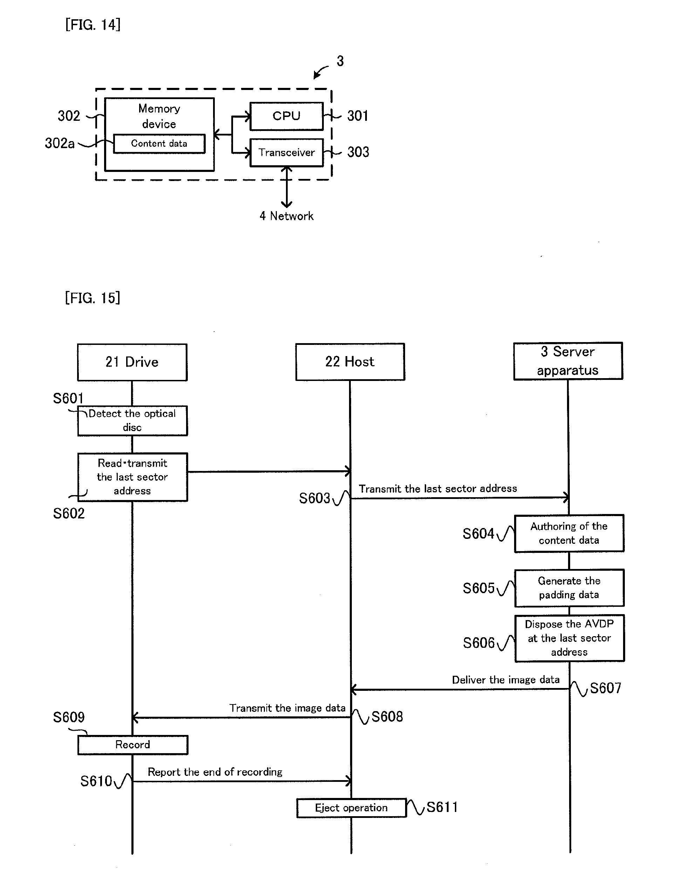

Here, with reference to FIG. 14, the server apparatus 3 will be explained. FIG. 14 is a block diagram showing the structure of the server apparatus 3 in the embodiment.

In FIG. 14, the server apparatus 3 is provided with a CPU 301, a memory device 302 such as a hard disk drive, and a transceiver 303. In a memory device 302a, one or a plurality of content data 302a are stored.

Incidentally, the structure of the recording apparatus 2 is the same as that of the recording apparatus shown in FIG. 3, so that the explanation thereof will be omitted. Moreover, the structure of the optical disc as one example of the "information recording medium" of the present invention which is set on the recording apparatus 2 is the same as that of the optical disc shown in FIG. 1 and FIG. 2, so that the explanation thereof will be omitted.

### (Operation of Content Delivery System)

Next, with reference to a timing chart in FIG. 15, an explanation will be given on the operation of the content delivery system when the content data is recorded onto the optical disc 1 by using the content delivery system 1000 constructed in the above manner.

In FIG. 15, firstly, when a user selects the content data to be recorded onto the optical disc 1 with reference to a menu screen provided by the server apparatus 3 or the like, the CPU 221 of the host computer 22 transmits a signal indicating that the optical disc 1 is to be detected, to the drive module 21 through the data input/output control device 223.

The CPU 211 of the drive module 21 controls the optical pickup 215 and so on to detect the optical disc 1 in accordance with the transmitted signal (step S601). If the optical disc 1 is not detected, the CPU 211 transmits a signal indicating that the optical disc 1 is not detected, to the host computer 22 through the data input/output control device 213. The CPU 221 of the host computer 22 which has received the transmitted signal typically controls the operation · display control device 225 to display a message or the like for facilitating the setting of the optical disc 1.

If the optical disc 1 is detected, the CPU 211 of the drive module 21 controls the optical pickup 215 and so on to read the last sector address 111a and the disc key recorded on the optical disc 1. Then, the CPU 211 transmits the read last sector address 111a and disc key, to the host computer 22 through the data input/output control device 213 (step S602).

The CPU 221 of the host computer 22 transmits the transmitted last sector address 111a and disc key, to the server apparatus 3 through the data input/output control device 223 (step S603).

The CPU 301 of the server apparatus 3 generates a title key and performs the authoring of the content data selected by the user of content data 302a stored in a memory 302, as well as generating an AVDP (step S604).

Then, the CPU 301 generates padding data with a volume corresponding to a volume (i.e. padding volume) obtained by subtracting the volume of the content data and the volume of predetermined data such as the AVDP from the volume of the optical disc 1 based on the transmitted last sector address 111a (step S605). Then, the CPU 301 disposes the generated AVDP at a position corresponding to the transmitted last sector address 111a (step S606). In the step S604 to the step S606, image data is generated.

Then, the CPU 301 delivers the generated image data to the host computer 22 of the recording apparatus 2 through the transceiver 303 (step S607). Then, the CPU 221 of the host computer 22 transmits the delivered image data to the drive module 21 through the data input/output control device 223 (step S608).

The CPU 211 of the drive module 21 controls the optical pickup 215 and so on to record the transmitted image data onto the optical disc 1 (step S609). At this time, the CPU 221 of the host computer 22 transmits a signal for regularly confirming the end of recording, to the drive module 21 through the data input/output control device 223. The CPU 211 of the drive module transmits a signal indicating the end of recording, to the host computer 22 through the data input/output control device 213, under the conditions that the recording of the transmitted image data is ended and that finalizing is completed (step S610).

The CPU 221 of the host computer 22 which has received the transmitted signal performs a process associated with a predetermined eject operation, thereby ending the process (step S611).

In the content delivery system 1000 in the embodiment, the AVDP is recorded into a sector on the optical disc 1 indicated by the last sector address 111a recorded in the CDZ 111. Therefore, as in a read-only optical disc, it is possible to obtain the AVDP in accordance with the last sector address 111a recorded in the CDZ 111.

As a result, according to the content delivery system 1000 in the embodiment, it is possible to improve the versatility of the recorded optical disc 1 and to bring it into compliance with a predetermined standard.

Incidentally, the present invention is not limited to the aforementioned embodiments, but various changes may be made, if desired, without departing from the essence or spirit of the invention which can be read from the claims and the entire specification. A recording apparatus and method, and a content delivery system, all of which involve such changes, are also intended to be within the technical scope of the present invention.

## Claims

1. A recording apparatus for recording content data onto a recordable information recording medium, said recording apparatus comprising:
a reading device for reading volume information which is pre-recorded on the information recording medium and which indicates a medium volume, which is a volume of the information recording medium;
an image data generating device for generating image data having a content area including the content data to be recorded onto the information recording medium and a padding area including padding data which is supplied to reach to the medium volume indicated by the read volume information; and
a recording device for recording the generated image data onto the information recording medium.

2. The recording apparatus according to claim 1, wherein said recording device further records management information which is information for managing the content data to be recorded, at a position corresponding to a value of the medium volume indicated by the read volume information of the information recording medium.

3. The recording apparatus according to claim 1, wherein said image data generating device includes a calculating device for calculating a padding volume which is a volume of the padding area from the medium volume indicated by the read volume information and a content volume which is a volume of the content data to be recorded.

4. The recording apparatus according to claim 3, wherein said image data generating device includes a padding data generating device for generating the padding data with a volume corresponding to the calculated padding volume.

5. The recording apparatus according to claim 3, wherein said image data generating device
includes a padding data generating device for generating small-volume padding data with a volume that is smaller than the calculated padding volume, and
repeatedly uses the generated small-volume padding data until it reaches to the calculated padding volume.

6. The recording apparatus according to claim 1, wherein
said image data generating device transmits position information indicating a position of the padding area, to said recording device, and
said recording device generates the padding data included in the padding area and records the generated padding data onto the information recording medium in accordance with the transmitted position information.

7. The recording apparatus according to claim 1, wherein said image data generating device includes a padding file generating device for generating the padding data included in the padding area, as a predetermined file.

8. The recording apparatus according to claim 1, wherein the medium volume indicated by the read volume information is smaller than a physical size of the information recording medium.

9. A recording apparatus for recording content data onto a recordable information recording medium, said recording apparatus comprising:
a reading device for reading volume information which is pre-recorded on the information recording medium and which indicates a medium volume, which is a volume of the information recording medium;
a reserving device for reserving a content area with a volume that is smaller than the medium volume indicated by the read volume information by a predetermined volume; and
a recording device for recording the content data to be recorded onto the information recording medium into the reserved content area and padding data to be supplied for the reserved content area.

10. A content delivery system comprising: a server apparatus and a recording apparatus which are included in a network; and an information recording medium which can be set on said recording apparatus and which is recordable, wherein
volume information indicating a medium volume which is a volume of said information recording medium is recorded on said information recording medium,
said recording apparatus transmits the pre-recorded volume information to said server apparatus when the information recording medium is set,
said server apparatus generates image data having a content area including the content data to be recorded onto the information recording medium and a padding area including padding data which is supplied to reach to the medium volume indicated by the transmitted volume information and delivers the generated image data to said recording apparatus, and
said recording apparatus records the delivered image data to the information recording medium.

11. A recording method of recording content data onto a recordable information recording medium, said recording apparatus comprising:
a reading process of reading volume information which is pre-recorded on the information recording medium and which indicates a medium volume, which is a volume of the information recording medium;
an image data generating process of generating image data having a content area including the content data to be recorded onto the information recording medium and a padding area including padding data which is supplied to reach to the medium volume indicated by the read volume information; and
a recording process of recording the generated image data onto the information recording medium.

12. A recording method of recording content data onto a recordable information recording medium, said recording apparatus comprising:
a reading process of reading volume information which is pre-recorded on the information recording medium and which indicates a medium volume, which is a volume of the information recording medium;
a reserving process of reserving a content area with a volume that is smaller than the medium volume indicated by the read volume information by a predetermined volume; and
a recording process of recording the content data to be recorded onto the information recording medium into the reserved content area and padding data to be supplied for the reserved content area.
